# EUROPÄISCHE PATENTSCHRIFT

(11) **EP 3 409 152 B1**
(45) Veröffentlichungstag und Bekanntmachung des Hinweises auf die Patenterteilung: **26.02.2020**
(21) Anmeldenummer: 18173334.6
(22) Anmeldetag: 18.05.2018
(51) Int. Cl.: A47J 31/44

(54) **KAFFEEMASCHINE, INSBESONDERE KAFFEEVOLLAUTOMAT**
COFFEE MACHINE, IN PARTICULAR A FULLY AUTOMATIC COFFEE MAKER
MACHINE À CAFÉ, EN PARTICULIER MACHINE À CAFÉ ENTIÈREMENT AUTOMATIQUE

(30) Priorität: 30.05.2017 DE 102017209054
(43) Veröffentlichungstag der Anmeldung: 05.12.2018
(73) Patentinhaber: BSH Hausgeräte GmbH, 81739 München (DE)
(72) Erfinder: Wrehde, Stefan, 83365 Nußdorf (DE); Stadler, Georg, 5101 Bergheim b. Salzburg (AT); Mathes, Anton, 83364 Neukirchen am Teisenberg (DE); Strobl, Robert, 83246 Unterwössen (DE)

(56) Entgegenhaltungen:
- EP-A2- 3 026 404
- WO-A1-2014/078893
- WO-A1-2017/061963
- DE-B3-102011 086 860

## Beschreibung

Die Erfindung betrifft eine Kaffeemaschine, insbesondere einen Kaffeevollautomaten.

Herkömmliche Kaffeemaschinen besitzen ein Tresterbehältnis zum Aufnehmen des in der Brühkammer im Zuge der Kaffeeherstellung ausfallenden Tresters. Gerade bei in der Gastronomie benutzten Kaffeemaschinen, insbesondere bei Kaffeevollautomaten, ist es von hohem Interesse, den Füllstand des Tresterbehältnisses zu kennen, sodass der Nutzer der Kaffeemaschine rechtzeitig, etwa mittels eines optischen Signals, darüber informiert werden kann, dass das Tresterbehältnis vollständig oder nahezu vollständig mit Trester befüllt ist und entleert werden muss, wenn weiterer Trester aufgenommen werden soll.

Die vorliegende Erfindung befasst sich mit dem Problem, eine Kaffeemaschine zu schaffen, bei welcher der momentane Füllstand des Tresterbehältnisses erkannt und somit insbesondere eine Überfüllung desselben verhindert werden kann.

Diese Aufgabe wird durch eine Kaffeemaschine gemäß dem unabhängigen Patentanspruch 1 gelöst. Bevorzugte Ausführungsformen sind Gegenstand der abhängigen Patentansprüche.

Grundgedanke der Erfindung ist demnach, die Menge an im Tresterbehältnis angesammelten Trester mittels eines Laserscanners - dem einschlägigen Fachmann auch als "Linienlaser" bekannt - zu bestimmen. Mittels eines solchen Laserscanners bzw. Linienlasers wird ein zweidimensionales Strahlprofil erzeugt, d.h. die vom Laserscanner erzeugte Laserstrahlung wird in einer vordefinierten Strahlebene emittiert. Wird der Erfassungsbereich des Laserscanners auf das Tresterbehältnis ausgerichtet, so kann vom Laserscanner am Trester reflektierte Laserstrahlung detektiert und auf diese Weise der Abstand des Tresters, insbesondere eines oberen Randes des im Tresterbehältnis vorhandenen Tresters, relativ zum Laserscanner bestimmt werden. Auf diese Weise lässt sich durch Auswertung der vom Laserscanner ermittelten Abstandsinformationen ein Höhenprofil des im Tresterbehältnis angesammelten Tresters ermitteln. Ein solches Höhenprofil korreliert mit der momentanen Füllstandshöhe des Tresterbehältnisses mit Trester, woraus wiederum auf die Menge an im Tresterbehältnis angesammelten Trester geschlossen werden kann. Insbesondere kann auf diese Weise, beispielsweise durch Vergleich mit einem Referenzhöhenprofil, welches einem vollständig gefüllten Tresterbehältnis entspricht, ermittelt werden, wann das Tresterbehältnis vollständig oder nahezu vollständig gefüllt ist und folglich geleert werden muss. Die Verwendung eines Laserscanners erlaubt also eine sehr genaue Bestimmung der Menge an Trester im Tresterbehältnis.

Eine erfindungsgemäße Kaffeemaschine, insbesondere ein erfindungsgemäßer Kaffeevollautomat, umfasst eine Brühkammer zum Zubereiten eines Kaffeeprodukts sowie ein Tresterbehältnis zum Aufnehmen des in der Brühkammer erzeugten Tresters. Erfindungsgemäß umfasst die Kaffeemaschine einen Laserscanner zum Bestimmen einer in dem Tresterbehältnis angesammelten Menge an Trester.

Gemäß einer bevorzugten Ausführungsform ist ein Erfassungsbereich des Laserscanners auf das Tresterbehältnis ausgerichtet. Die Ausrichtung des Erfassungsbereichs erfolgt dabei derart, dass mittels des Laserscanners ein Höhenprofil zumindest eines Teils des im Tresterbehältnis angesammelten Tresters bestimmt werden kann.

Bevorzugt ist der Laserscanner zur Bestimmung eines Abstands des Laserscanners zu dem im Tresterbehältnis vorhandenen Trester ausgebildet. Mit Hilfe des vom Laserscanner erzeugten zweidimensionalen Strahlprofils kann somit der Abstand des oberen Rands des Tresters zum Laserscanner ermittelt werden, was dem gesucht Höhenprofil des Tresters im Behältnis entspricht.

Bei einer vorteilhaften Weiterbildung ist der Laserscanner oberhalb des Tresterbehältnisses angeordnet, so dass der Erfassungsbereich des Laserscanners, vorzugsweise von oben, auf einen oberen Rand des im Tresterbehältnis vorhandenen Tresters gerichtet ist. Diese Maßnahme vereinfacht die Bestimmung des gesuchten Höhenprofils.

Gemäß einer anderen bevorzugten Ausführungsform umfasst die Brühkammer einen Auswurf, über welchen Trester aus der Brühkammer in das Tresterbehältnis abführbar ist. Bei dieser Ausführungsform umfasst der Erfassungsbereich des Laserscanners besagten Auswurf. Somit kann vom Laserscanner auch erkannt werden, wenn Trester aus der Brühkammer ausgeworfen bzw. in das Tresterbehältnis eingebracht wird.

Zweckmäßig kann der Laserscanner mit einer Laserstrahlquelle zum Emittieren von Laserstrahlung und mit einem Laserstrahldetektor zum Empfangen der von der Laserstrahlquelle emittierten und am Trester bzw. am Tresterbehältnis reflektierten Laserstrahlung ausgestattet sein. Dabei erfolgt die Abstandsbestimmung relativ zur Position der Laserstrahlquelle des Laserscanners. Ein derart ausgebildeter Laserscanner ist besonders kompakt aufgebaut und somit besonders kostengünstig.

Bei einer anderen vorteilhaften Weiterbildung ist zwischen dem Laserscanner und dem Tresterbehältnis eine für die Laserstrahlung transparente Blende angeordnet. Auf diese Weise kann ein unerwünschtes Verschmutzen des Laserscanners, insbesondere durch den im Tresterbehältnis aufgenommenen Trester, verhindert werden.

Besonders bevorzugt ist die Blende mittels einer elektrischen Heizeinrichtung beheizbar oder beheizt. Durch ein Beheizen der Blende kann ein teilweises oder sogar vollständiges Beschlagen der Blende, welches die Transmission der Laserstrahlung mindern würde, weitegehend oder sogar vollständig verhindert werden.

Bei einer weiteren vorteilhaften Weiterbildung ist unter dem Tresterbehältnis ein Wassersammelbehältnis zum Sammeln des im Zuge des Brühprozesses gebildeten Wassers vorgesehen. Bei dieser Weiterbildung umfasst der Erfassungsbereich des Laserscanners das Wassersammelbehältnis. Somit kann mit Hilfe des Laserscanners nicht nur der im Tresterbehältnis angesammelte Trester, sondern auch die Menge des im Wassersammelbehältnis angesammelten Wassers bestimmt werden.

Gemäß einer anderen bevorzugten Ausführungsform umfasst die Kaffeemaschine ein Gehäuse, an oder in welchem das Tresterbehältnis und/oder das Wassersammelbehältnis entfernbar angeordnet sind. Dabei ist der Erfassungsbereich des Laserscanners derart auf das Tresterbehältnis und/oder das Wassersammelbehältnis ausgerichtet, dass ein Entfernen des Tresterbehältnisses und/oder des Wassersammelbehältnisses detektierbar ist. Bei dieser Ausführungsform wird also der Laserscanner nicht nur zum Detektieren von Trester im Tresterbehältnis herangezogen, sondern es kann zusätzlich auch bestimmt werden, ob sich das Tresterbehältnis am bzw. im Gehäuse angeordnet befindet oder zum Entleeren am aus dem Gehäuse entfernt wurde. Ebenso kann bestimmt werden, ob das Wassersammelbehältnis noch am bzw. im Gehäuse angeordnet ist oder zum Entleeren vom Gehäuse entfernt wurde.

Weitere wichtige Merkmale und Vorteile der Erfindung ergeben sich aus den Unteransprüchen, aus den Zeichnungen und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

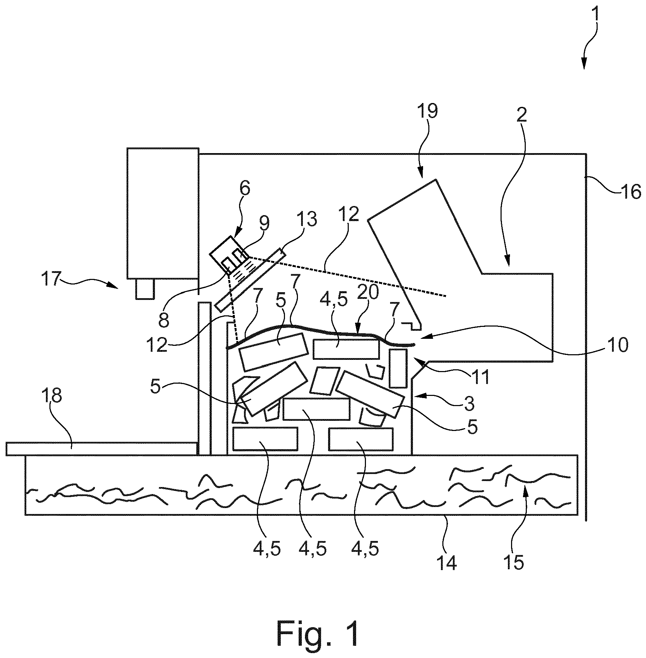

Die einzige Figur 1 zeigt ein Beispiel einer als Kaffeevollautomat ausgebildeten erfindungsgemäßen Kaffeemaschine 1. Die Kaffeemaschine 1 umfasst eine Brühkammer 2 zum Zubereiten eines Kaffeeprodukts. Über einen Kaffeeschacht 19 kann Kaffeepulver in die Brühkammer 2 eingebracht werden. Außerdem ist ein Tresterbehältnis 3 zum Aufnehmen des in der Brühkammer 2 erzeugten Tresters 4 vorgesehen. Die Brühkammer 2 umfasst einen Auswurf 10, über welchen der in der Brühkammer 2 erzeugte Trester 4 aus der Brühkammer 2 über eine im Tresterbehältnis 3 vorgesehene Aufnahmeöffnung 11 in das Tresterbehältnis 3 gelangen kann. Im Beispiel der Figuren sind im Tresterbehältnis 3 mehrere sogenannte "Tresterkuchen" 5 angeordnet, die zusammen den Trester 4 bilden.

Des Weiteren umfasst die Kaffeemaschine 1 eine Abstellfläche 18, auf welcher ein Gefäß (nicht gezeigt) zum Befüllen des in der Kaffeemaschine 1 erzeugten Kaffeeprodukts abgestellt werden kann. Oberhalb der Abstellfläche 18 ist ein Kaffeeauslass 17 angeordnet, an welchem das Kaffeeprodukt zum Befüllen des Gefäßes bereitgestellt wird. Unterhalb des Tresterbehältnisses 3 ist ein Wassersammelbehältnis 14 zum Sammeln des nach dem Brühprozess nicht mehr benötigten (Brüh-)Wassers 15 angeordnet. Die Kaffeemaschine 1 umfasst gemäß Figur 1 ein Gehäuse 16, an bzw. in welchem das Tresterbehältnis 3 sowie das Wassersammelbehältnis 14 entfernbar angebracht sind.

Außerdem umfasst die Kaffeemaschine 1 einen Laserscanner 6 zum Bestimmen der in dem Tresterbehältnis 3 angesammelten Menge an Trester 4. Der Laserscanner 6 besitzt eine Laserstrahlquelle 8 zum Emittieren von Laserstrahlung in Form eines zweidimensionalen Strahlprofils und einen Laserstrahldetektor 9 zum Detektieren der von der Laserstrahlquelle 8 emittierten und am Trester 4 bzw. am Tresterbehältnis 3 reflektierten Laserstrahlung. Der Laserscanner 6 ist für die zweidimensionale Entfernungs- bzw. Abstandsbestimmung geeignet. Die zweidimensionale Entfernungsbestimmung erfolgt durch Auswertung der von der Laserstrahlquelle 8 emittierten und durch Reflexion am Trester 4 zurück in den Lasterstrahldetektor 9 reflektierten Laserstrahlung. Der Erfassungsbereich 12 des Laserscanners 6, der durch die Lage des vom Laserscanner 6 erzeugten zweidimensionalen Strahlprofils festgelegt wird, ist also auf das Tresterbehältnis 3 ausgerichtet. Entsprechend Figur 1 ist der Laserscanner 6 oberhalb des Tresterbehältnisses 3 angeordnet, so dass der Erfassungsbereich 12 des Laserscanners 6 von oben auf einen oberen Rand 20 des im Tresterbehältnis 3 angesammelten Tresters 4 gerichtet ist.

Durch Auswertung der auf diese Weise mittels des Laserscanners 6 erhaltenen, Abstandsinformationen lässt sich ein Höhenprofil 7 des im Tresterbehältnis 3 angesammelten Tresters 4 bestimmen. Das Höhenprofil 7 wird dabei in der Ebene des zweidimensionalen Strahlprofils ermittelt. Das Höhenprofil 7 korreliert mit der momentanen Füllstandshöhe des mit Trester 4 befüllten Tresterbehältnisses 3, woraus wiederum auf die Menge des im Tresterbehältnis 3 angesammelten Tresters 4 geschlossen werden kann.

Außen an der Laserstrahlquelle 8 kann eine für Laserstrahlung transparente Blende 13 angeordnet sein. Die Blende 13 kann mittels einer in der Figur nicht näher dargestellten elektrischen Heizeinrichtung beheizbar sein. Mittels einer solchen Blende 13 kann verhindert werden, dass die ordnungsgemäße Funktion des Laserscanners durch vom Trester 4 aufsteigenden Wasserdampf beeinträchtigt wird.

Wie die Figur 1 außerdem erkennen lässt, umfasst die Brühkammer 2 einen Auswurf 10, über welchen Trester 4 aus der Brühkammer 2 in den Tresterbehältnis 3 abgeführt werden kann. Der Erfassungsbereich 12 des Laserscanners 6 umfasst den Auswurf 10, so dass vom Laserscanner 6 ein Auswerfen von Trester 4 aus der Brühkammer 2 bzw. ein Einbringen von Trester 4 in das Tresterbehältnis 3 detektiert werden kann.

Die Kaffeemaschine 1 kann mit einem Gehäuse 16 ausgestattet sein, an welchem das Tresterbehältnis 3 und das Wassersammelbehältnis 14 entfernbar angeordnet sind. Im Beispielszenario ist der Erfassungsbereich 12 des Laserscanners 6 auf das Tresterbehältnis 3 und auf das Wassersammelbehältnis 14 ausgerichtet, dass sowohl ein Entfernen des Tresterbehältnisses 3 als auch ein Entfernen des Wassersammelbehältnisses 14 vom Gehäuse 16 detektierbar ist.

Bei einer in den Figuren nicht näher dargestellten Weiterbildung wird vorgeschlagen, das von dem Laserscanner 6 erzeugte zweidimensionale Strahlprofil auf ein dreidimensionales Strahlprofil zu erweitern. Dies kann mit Hilfe von kippbaren oder drehbaren Spiegeln (nicht gezeigt) geschehen, so dass die Lage der Strahlebene zeitlich variiert werden kann. Denkbar ist es aber auch, den Laserscanner 6 selbst senkrecht zur Ebene des Strahlprofils zu verkippen. Schließlich ist es auch denkbar, mit Hilfe eines weiteren, zusätzlichen Laserscanners (nicht gezeigt), der ein zum Laserscanner 6 gekreuztes Strahlprofil erzeugt, ein dreidimensionales Strahlprofil zu gewinnen.

Die Begriffe "oben" und "unten" beziehen sich vorliegend auf eine Gebrauchslage der Kaffeemaschine 1.

### Bezugszeichenliste

- 1: Kaffeemaschine
- 2: Brühkammer
- 3: Tresterbehältnis
- 4: Trester
- 5: Tresterkuchen
- 6: Laserscanner
- 7: Höhenprofil
- 8: Laserstrahlquelle
- 9: Laserstrahldetektor
- 10: Auswurf
- 11: Aufnahmeöffnung
- 12: Erfassungsbereich
- 13: Blende
- 14: Wassersammelbehältnis
- 15: Wasser
- 16: Gehäuse
- 17: Kaffeeauslass
- 18: Abstellfläche
- 19: Kaffeeschacht
- 20: oberer Rand

## Patentansprüche

1. Kaffeemaschine (1), insbesondere Kaffeevollautomat, mit einer Brühkammer (2) zum Zubereiten eines Kaffeeprodukts, mit einem Tresterbehältnis (3) zum Aufnehmen des in der Brühkammer (2) erzeugten Tresters (4), **gekennzeichnet durch** einen Laserscanner (6) zum Bestimmen einer in dem Tresterbehältnis (3) angesammelten Menge an Trester (4).

2. Kaffeemaschine nach Anspruch 1, **dadurch gekennzeichnet, dass** ein Erfassungsbereich (12) des Laserscanners (6) auf das Tresterbehältnis (3) ausgerichtet ist, derart, dass mittels des Laserscanners (6) ein Höhenprofil (7) zumindest eines Teils des im Tresterbehältnis (3) angesammelten Tresters (4) bestimmbar ist.

3. Kaffeemaschine nach Anspruch 2, **dadurch gekennzeichnet, dass** der Laserscanner (6) zur Bestimmung eines Abstands des Laserscanners (6) zu dem im Tresterbehältnis (3) vorhandenen Trester (4) ausgebildet ist, so dass mittels einer solchen Abstandsbestimmung das Höhenprofil (7) des im Tresterbehältnis (3) angesammeltem Tresters (4) bestimmbar ist.

4. Kaffeemaschine nach einem der Ansprüche 1 bis 3, **dadurch gekennzeichnet, dass** der Laserscanner (6) oberhalb des Tresterbehältnisses (3) angeordnet ist, so dass der Erfassungsbereich (12) des Laserscanners (6), vorzugsweise von oben, auf einen oberen Rand (20) des im Tresterbehältnis (3) vorhandenen Tresters (4) gerichtet ist.

5. Kaffeemaschine nach einem der vorhergehenden Ansprüche, **dadurch gekennzeichnet, dass** die Brühkammer (2) einen Auswurf (10) umfasst, über welchen Trester (4) aus der Brühkammer (2) in das Tresterbehältnis (3) abführbar ist, wobei der Erfassungsbereich (12) des Laserscanners (6) den Auswurf (10) umfasst, so dass vom Laserscanner (6) ein Auswerfen von Trester (4) aus der Brühkammer (2) und/oder ein Einbringen von Trester (4) in das Tresterbehältnis (3) detektierbar ist.

6. Kaffeemaschine nach einem der vorhergehenden Ansprüche, **dadurch gekennzeichnet, dass** der Laserscanner (6) eine Laserstrahlquelle (8) zum Emittieren von Laserstrahlung und einen Laserstrahldetektor (9) zum Empfangen der von der Laserstrahlquelle (8) emittierten und am Trester (4) und/oder am Tresterbehältnis (3) reflektierten Laserstrahlung umfasst, wobei die Abstandsbestimmung relativ zur Position der Laserstrahlquelle (8) erfolgt.

7. Kaffeemaschine nach einem der vorhergehenden Ansprüche, **dadurch gekennzeichnet, dass** zwischen dem Laserscanner (6) und dem Tresterbehältnis (3) eine für die Laserstrahlung transparente Blende (13) angeordnet ist.

8. Kaffeemaschine nach Anspruch 7, **dadurch gekennzeichnet, dass** die Blende (13) mittels einer elektrischen Heizeinrichtung beheizt ist.

9. Kaffeemaschine nach einem der vorhergehenden Ansprüche, **dadurch gekennzeichnet, dass** unterhalb des Tresterbehältnisses (3) ein Wassersammelbehältnis (14) zum Sammeln von nach dem Brühvorgang ausfallendem Wasser (15) vorgesehen ist, wobei der Erfassungsbereich (12) des Laserscanners (6) das Wassersammelbehältnis (14) umfasst, so dass vom Laserscanner (6) die Menge an im Wassersammelbehältnis angesammelten Wasser bestimmbar ist.

10. Kaffeemaschine nach einem der vorhergehenden Ansprüche, **dadurch gekennzeichnet, dass** die Kaffeemaschine (1) ein Gehäuse (16) umfasst, an welchem das Tresterbehältnis (3) und/oder das Wassersammelbehältnis (14) entfernbar angeordnet sind, wobei der Erfassungsbereich (12) des Laserscanners (6) derart auf das Tresterbehältnis (3) und/oder auf das Wassersammelbehältnis (14) ausgerichtet ist, dass ein Entfernen des Tresterbehältnisses (3) und/oder des Wassersammelbehältnisses (14) vom Gehäuse (16) detektierbar ist.

## Claims

1. Coffee machine (1), in particular fully automatic coffee machine, with a brewing chamber (2) for preparing a coffee product, with a grounds container (3) for receiving the coffee grounds (4) generated in the brewing chamber (2), **characterised by** a laser scanner (6) for determining an amount of coffee grounds (4) which has accumulated in the grounds container (3).

2. Coffee machine according to claim 1, **characterised in that** a capture region (12) of the laser scanner (6) is oriented towards the grounds container (3), such that a height profile (7) of at least part of the coffee grounds (4) which have accumulated in the grounds container (3) can be determined by means of the laser scanner (6).

3. Coffee machine according to claim 2, **characterised in that** the laser scanner (6) is embodied for determining a distance between the laser scanner (6) and the coffee grounds (4) present in the grounds container (3), so that the height profile (7) of the coffee grounds (4) which have accumulated in the grounds container (3) can be determined by means of such a distance determination.

4. Coffee machine according to one of claims 1 to 3, **characterised in that** the laser scanner (6) is arranged above the grounds container (3), so that the capture region (12) of the laser scanner (6) is directed towards an upper edge (20) of the coffee grounds (4) present in the grounds container (3), preferably from above.

5. Coffee machine according to one of the preceding claims, **characterised in that** the brewing chamber (2) comprises an ejector (10), via which coffee grounds (4) are able to be ejected from the brewing chamber (2) into the grounds container (3), wherein the capture region (12) of the laser scanner (6) includes the ejector (10), so that an ejection of coffee grounds (4) from the brewing chamber (2) and/or an introduction of coffee grounds (4) into the grounds container (3) can be detected by the laser scanner (6).

6. Coffee machine according to one of the preceding claims, **characterised in that** the laser scanner (6) comprises a laser beam source (8) for emitting laser radiation and a laser beam detector (9) for receiving the laser radiation emitted by the laser beam source (8) and reflected on the coffee grounds (4) and/or on the grounds container (3), wherein the distance determination takes place in relation to the position of the laser beam source (8).

7. Coffee machine according to one of the preceding claims, **characterised in that** a panel (13), which is transparent to the laser radiation, is arranged between the laser scanner (6) and the grounds container (3).

8. Coffee machine according to claim 7, **characterised in that** the panel (13) is heated by means of an electric heating facility.

9. Coffee machine according to one of the preceding claims, **characterised in that** a water collection container (14) is provided below the grounds container (3) for collecting water (15) precipitating after the brewing procedure, wherein the capture region (12) of the laser scanner (6) includes the water collection container (14), so that the amount of water which has accumulated in the water collection container can be determined by the laser scanner (6).

10. Coffee machine according to one of the preceding claims, **characterised in that** the coffee machine (1) comprises a housing (16), on which the grounds container (3) and/or the water collection container (14) are arranged in a removable manner, wherein the capture region (12) of the laser scanner (6) is oriented towards the grounds container (3) and/or towards the water collection container (14) such that a removal of the grounds container (3) and/or of the water collection container (14) from the housing (16) can be detected.

## Revendications

1. Machine à café (1), en particulier machine à café entièrement automatique, avec une chambre de percolation (2) destinée à la préparation d'un produit au café, avec un récipient pour le marc (3) destiné à loger le marc (4) produit dans la chambre de percolation (2), **caractérisée par** un scanner laser (6) destiné à déterminer une quantité de marc (4) accumulée dans le récipient pour le marc (3).

2. Machine à café selon la revendication 1, **caractérisée en ce qu'**une zone de détection (12) du scanner laser (6) est orientée sur le récipient pour le marc (3) de sorte qu'au moyen du scanner laser (6) il est possible de déterminer un profil de la hauteur (7) d'au moins une partie du marc (4) accumulé dans le récipient pour le marc (3).

3. Machine à café selon la revendication 2, **caractérisée en ce que** le scanner laser (6) est réalisé pour déterminer une distance du scanner laser (6) par rapport au marc (4) présent dans le récipient pour le marc (3), de sorte qu'il est possible de déterminer, à l'aide d'une détermination de distance de ce type le profil de la hauteur (7) du marc (4) accumulé dans le récipient pour le marc (3).

4. Machine à café selon l'une des revendications 1 à 3, **caractérisée en ce que** le scanner laser (6) est disposé au-dessus du récipient pour le marc (3) de sorte que la zone de détection (12) du scanner laser (6) est orientée de préférence d'en haut, sur un bord supérieur (20) du marc (4) présent dans le récipient pour le marc (3).

5. Machine à café selon l'une des revendications précédentes, **caractérisée en ce que** la chambre de percolation (2) comprend un système d'éjection (10) par laquelle le marc (4) peut être évacué de la chambre de percolation (2) dans le récipient pour le marc (3), la zone de détection (12) du scanner laser (6) comprenant le système d'éjection (10) de sorte que, du scanner laser (6), l'éjection de marc (4) hors de la chambre de percolation (2) et/ou l'apport de marc (4) dans le récipient pour le marc (3) peut être détecté.

6. Machine à café selon l'une des revendications précédentes, **caractérisée en ce que** le scanner laser (6) comprend une source de rayon laser (8) destinée à émettre un rayonnement laser et un détecteur de rayon laser (9) destiné à la réception du rayonnement laser émis par la source de rayon laser (8) et réfléchie sur le marc (4) et/ou sur le récipient pour le marc (3), la détermination de distance s'effectuant par rapport à la position de la source de rayon laser (8).

7. Machine à café selon l'une des revendications précédentes, **caractérisée en ce qu'**entre le dispositif laser (6) et le récipient pour le marc (3) est agencé un panneau (13) transparent pour le rayonnement laser.

8. Machine à café selon la revendication 7, **caractérisée en ce que** le panneau (13) est chauffé au moyen d'un dispositif de chauffage électrique.

9. Machine à café selon l'une des revendications précédentes, **caractérisée en ce qu'**en dessous du récipient pour le marc (3) se trouve un récipient de collecte d'eau (14) destiné à la collecte d'eau (15) retombant après le processus de percolation, la zone de détection (12) du scanner laser (6) comprenant le récipient de collecte d'eau (14) de sorte que du scanner laser (6), la quantité d'eau accumulée dans le récipient pour la collecte d'eau, peut être déterminée.

10. Machine à café selon l'une des revendications précédentes, **caractérisée en ce que** la machine à café (1) comprend un corps (16), sur lequel le récipient pour le marc (3) et/ou le récipient de collecte d'eau (14) est disposé de façon amovible, la zone de détection (12) du scanner laser (6) étant orientée sur le récipient pour le marc (3) et/ou sur le récipient de collecte d'eau (14) de sorte qu'un retrait du récipient pour le marc (3) et/ou du récipient de collecte d'eau (14) du corps peut être détecté.
